# EUROPEAN PATENT APPLICATION

(11) **EP 4 841 268 A1**
(43) Date of publication of application: **18.11.2026**
(21) Application number: 24917021.8
(22) Date of filing: 11.12.2024
(51) Int. Cl.: G01N 35/10, G01N 35/02

(54) **AUTOMATIC ANALYSIS DEVICE AND AUTOMATIC ANALYSIS METHOD**

(30) Priority: 11.01.2024 JP 2024002891
(71) Applicant: Hitachi High-Tech Corporation, Minato-ku Tokyo 105-6409 (JP)
(72) Inventor: TAKAKURA, Tatsuki, Tokyo 105-6409 (JP); YAMANO, Teruhiro, Tokyo 105-6409 (JP); SASAKI, Shingo, Tokyo 105-6409 (JP); YAMAMOTO, Takashi, Tokyo 105-6409 (JP)
(74) Representative: Strehl & Partner mbB
(86) International application number: PCT/JP2024/043904
(87) International publication number: WO 2025/150336

(57) **Abstract**

An automatic analyzer is provided which is capable of shortening the time required for reagent registration while avoiding increasing complexity of apparatus structure and increasing costs. An automatic analyzer 1 includes: a sensing portion 521 for sensing a volume of a reagent contained in a container; a stirring portion 531 for stirring the reagent contained in the container; a control unit 3 for controlling the sensing portion 521 and the stirring portion 531; and a storage unit 4 for storing information on reagents. In a step of storing information on a newly used reagent in the storage unit 4, after the sensing portion 521 senses a volume of a second reagent contained in a second reagent container 222. The control unit 3 controls in parallel the sensing portion 521 to perform an operation of sensing a volume of a first reagent contained in a first reagent container 221, and the stirring portion 531 to perform an operation of stirring the second reagent.

## Description

### Technical Field

The present invention relates to an automatic analyzer and a method of automatic analysis.

### Background Art

As an example of automatic analyzers in which a reaction is caused between an analysis reagent that reacts specifically with a component to be measured in a sample such as blood and/or the like and the sample, and then the resulting reactant is measured mainly by spectroscopic technique, Patent Literature 1 describes a method of aspirating, by using a reagent probe, a magnetic particle reagent used in an immunological test, while stirring the magnetic particle reagent with a stirring rod.

### Citation List

### Patent Literature

Patent Literature 1: Japanese Unexamined Patent Application Publication No. 2013-217882

### Summary of Invention

### Technical Problem

In an automatic analyzer, when a new reagent is registered in the apparatus, a preparation process is often required to make the reagent usable. For example, in order to properly manage the remaining volume of the reagent, it is necessary to sense whether the initial filling level of the reagent is appropriate. Automatic analyzers are widely used which have a fluid level sensing function that causes a reagent probe to sense the fluid level of a reagent, and the filling level of the reagent is measured by sensing the fluid level of the reagent.

Furthermore, a reagent including magnetic particles, such as a reagent used in immunoassay, requires thorough stirring to ensure uniformity, as the magnetic particles are precipitated at the bottom of a reagent container in the case of a new reagent. In automatic analyzers, commonly used is a method of stirring by immersing a stirring rod from the top of a reagent container and rotating the stirring rod.

According to Patent Literature 1, the stirring rod is installed inside a reagent container to stir a solution by a rotational operation, and a reagent can be aspirated using the reagent probe while the stirring rod is being rotated from outside the reagent container via a detachable mechanism. By combining this method with a fluid level sensing function using a reagent probe, it is believed that the time required for reagent registration operation can be reduced.

However, in the apparatus described in Patent Literature 1, a stirring rod needs to be provided for each reagent container, and since the stirring rod is driven indirectly using the detachable mechanism, the reagent container and apparatus structure become complex, leading to increased costs.

Therefore, an object of the present invention is to provide an automatic analyzer and a method of automatic analysis that are capable of shortening the time required for reagent registration while avoiding increasing complexity of apparatus structure and increasing costs, by using a fluid level sensing function using a reagent probe and stirring technology using a stirring rod, which are widely used in automatic analyzers.

### Solution to Problem

In order to achieve the above object, the present invention is configured as follows.

An automatic analyzer includes: a sensing portion for sensing a volume of a reagent contained in a container; a stirring portion for stirring the reagent contained in the container; a control unit for controlling the sensing portion and the stirring portion; and a storage unit for storing information on reagents. In a step of storing information on a newly used reagent in the storage unit, after the sensing portion senses a volume of a second reagent contained in a second reagent container, the control unit controls in parallel the sensing portion to perform an operation of sensing a volume of a first reagent contained in a first reagent container, and the stirring portion to perform an operation of stirring the second reagent.

Further, a method of automatic analysis includes: a first sensing step of sensing a volume of a first reagent; a second sensing step of sensing a volume of a second reagent; and a stirring step of stirring the second reagent. In a step of storing information on a newly used reagent in a storage unit, after execution of the second sensing step, the first sensing step and the stirring step are executed in parallel.

### Advantageous Effects of Invention

According to the present invention, a volume check operation and a reagent stirring operation during reagent registration can be performed efficiently, the time required for the reagent registration can be shortened, and the overall analysis operation time can be shortened. Objects, configurations, and effects other than the above will be apparent from the description of the following embodiments.

### Brief Description of Drawings

[FIG. 1] Fig. 1 is a diagram illustrating an automatic analyzer according to a first embodiment.
[FIG. 2] Fig. 2 is a diagram illustrating an operation flow for reagent registration.
[FIG. 3] Fig. 3 is a side view illustrating the positional relationship of mechanisms between a start time and an end time of the reagent registration.
[FIG. 4] Fig. 4 is a side view illustrating the positional relationship of a reagent dispensing mechanism, a reagent container and a reagent stirring mechanism during reagent registration operation.
[FIG. 5] Fig. 5 is a side view illustrating the positional relationship of a reagent dispensing mechanism, a reagent container and a reagent stirring mechanism during reagent registration operation.
[FIG. 6] Fig. 6 is a side view illustrating the positional relationship of a reagent dispensing mechanism, a reagent container and a reagent stirring mechanism during reagent registration operation.
[FIG. 7] Fig. 7 is a diagram illustrating time required to register a reagent.

### Description of Embodiments

Embodiments of an automatic analyzer and a method of automatic analysis will be described below with reference to the accompanying drawings.

It is noted that each of the embodiments described below is merely an example, and modifications can be made without departing from the sprit and scope. Further, the characteristics illustrated and described along with an exemplary aspect may be combined with characteristics of another aspect.

Further, throughout the drawings used herein, the same or similar reference signs denote the same or corresponding elements and a repetitive description regarding the elements may be sometimes omitted.

### [Embodiment]

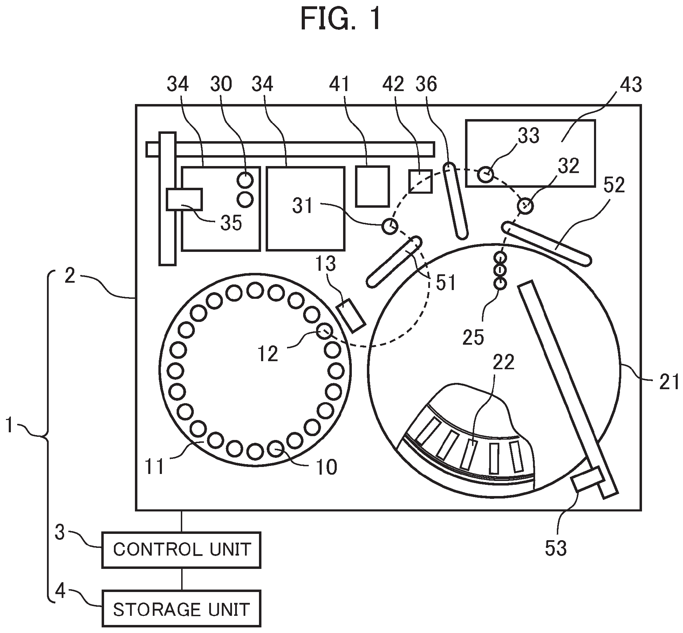

Embodiments of an automatic analyzer and a method of automatic analysis will be described below with reference to Figs. 1 to 7.

In Fig. 1, an automatic analyzer 1 is an apparatus for analyzing a sample by using reagents according to predetermined analysis items, and includes an analysis section 2, a control unit 3, and a storage unit 4.

The analysis section 2 includes a sample holding unit 11, a sample dispensing mechanism 51, a reagent holding unit 21, a reagent dispensing mechanism 52, a reagent stirring mechanism 53, a first conveyance mechanism 35, an incubator 41, a reaction container stirring mechanism 42, a reaction container tray 34, a second conveyance mechanism 36, a measurement unit 43, and the like.

The sample holding unit 11 is structured to be able to hold, in a ring fashion, a plurality of sample containers 10 that contain samples to be analyzed. During dispensing sample, the sample holding unit 11 rotates to transfer the sample container 10 to an access position to the sample dispensing mechanism 51. The sample holding unit 11 includes a sample aspiration position 12. Immediately before the sample dispensing mechanism 51 aspirates the sample to be analyzed, the sample holding unit 11 rotates to convey the sample container 10 to the sample aspiration position 12.

It is noted that the sample holding unit 11 may be configured to be made usable in the manner in which two sample holding units 11 are physically replaced with each other. For example, the two sample holding units 11 may be configured in the alternately replaceable manner. Alternatively, the sample holding unit 11 may be configured to be mounted with a small window through which a sample can be added or exchanged in the middle. However, a form in which a user performs installation by oneself is not necessary to be taken, and a conveying form using a conveyance mechanism and/or the like may be taken.

Without limited to the disc scheme in which the sample containers are conveyed by the rotational operation as illustrated in the figures, a rack scheme to convey collectively a plurality of sample containers may be taken.

A sample information reader 13 for reading sample information attached to the sample container 10 is further included in proximity to the sample holding unit 11. By reading the sample information immediately before sample dispensing, it may be verified whether or not the sample container 10 is a sample container to be analyzed.

The sample dispensing mechanism 51 includes a rotary drive mechanism, a vertical drive mechanism, and a dispensing probe. By the rotary drive mechanism and the vertical drive mechanism, the sample is aspirated from the sample container 10 at the sample aspiration position 12, and the sample is discharged to a reaction container 30 at a sample discharge position 31. It is noted that, as illustrated in the figures, the configuration to make access to each position by means of the rotational operation may be employed, or alternatively, the configuration to make access to each position by means of the linear motion operation may be employed.

The reagent holding unit 21 is a mechanism for holding a plurality of reagent containers 22 that contain reagents to induce a reaction in the reaction container 30. The reagent holding unit 21 has a reagent disc and a reagent container holding unit (both are omitted for the purpose of graphical expression). It is desirable for the reagent holding unit 21 to have a cooling function.

The reagent container holding units are arranged in a ring shape on the reagent disc, and are configured to hold the plurality of reagent containers 22. The reagent disc has a rotary drive mechanism, so that each of the reagent containers 22 is moved to a predetermined position on the circumferential portion by the rotational motion.

In the reagent holding unit 21, where the reagent holding unit 21 is of the disc scheme, the reagent holding unit 21 rotates before reagent dispensing, a proper reagent container is conveyed to a reagent aspiration position 25 so that the reagent dispensing mechanism 52 is able to aspirate a reagent required for analysis. The reagent containers 22 are each configured of a plurality of different reagent bottles. In the present embodiment, a case in which the reagent containers 22 contain a first reagent and a second reagent including magnetic particles will be described as an example.

The reagent dispensing mechanism 52 includes a rotary drive mechanism, a vertical drive mechanism, and a dispensing probe. By the rotary drive mechanism and the vertical drive mechanism, the reagent is aspirated from the reagent container 22 at the reagent aspiration position 25, and the reagent is discharged to the reaction container 30 at a reagent discharge position 32. It is noted that, as illustrated in the figures, the configuration to make access to each position by means of the rotational operation may be employed, or alternatively, the configuration to make access to each position by means of the linear motion operation may be employed.

Above the reagent holding unit 21, the reagent stirring mechanism 53 is installed as stirring means for stirring the reagent contained in the reagent container 22. The reagent stirring mechanism 53 includes a horizontal linear drive mechanism, a vertical drive mechanism, and a stirring paddle. It is noted that, as illustrated in the figures, the configuration to make access to each position by means of the linear motion operation may be employed, or alternatively, the configuration to make access to each position by means of the rotational operation may be employed.

The reagent stirring mechanism 53 moves into an area above the reagent container 22 containing a magnetic particle solution to be stirred. The reagent stirring mechanism 53 moves down the stirring puddle and then rotates the puddle in order to stir the magnetic particle solution. To prevent natural precipitation of magnetic particles in the solution, the reagent stirring mechanism 53 stirs the magnetic particles immediately before the reagent is dispensed. Furthermore, when the reagent is first introduced into the automatic analyzer 1, the reagent stirring mechanism 53 stirs any magnetic particles that have solidified during storage. This operation is called an initial stirring operation.

An analysis flow will be described below in process sequence.

The first conveyance mechanism 35 has drive mechanisms in the X-axis, Y-axis and Z-axis directions and a reaction container grasping mechanism, and moves above a reaction container waste hole (omitted for the purpose of graphical expression), the incubator 41, the reaction container stirring mechanism 42, and the reaction container tray 34.

The second conveyance mechanism 36 has a rotary drive mechanism, a vertical drive mechanism, and a reaction container grasping mechanism, and includes function of moving the reaction container 30, which contains a reaction liquid with the sample and the reagent mixed, to the reaction container stirring mechanism 42 and/or each of reaction container placement positions such as the sample discharge position 31, the reagent discharge position 32, a reaction container delivery position 33, and the like which are installed on the rotational trajectory.

The first conveyance mechanism 35 moves the reaction container 30 from the reaction container tray 34 housing a plurality of reaction containers 30 to the sample discharge position 31. The sample dispensing mechanism 51 dispenses the predetermined volume of the sample into the reaction container 30 placed in the sample discharge position 31. Subsequently, the reaction container 30 into which the sample has been discharged is moved to the reagent discharge position 32 by the second conveyance mechanism 36.

The reagent dispensing mechanism 52 dispenses the predetermined volume of the first reagent into the reaction container 30 placed in the reagent discharge position 32. Subsequently, the reaction container 30 is moved to a position of the reaction container stirring mechanism 42 by the second conveyance mechanism 36 so that the mixed liquid within the reaction container 30 is stirred.

After the reaction liquid is stirred, the reaction container 30 is moved to the incubator 41 by the first conveyance mechanism 35. The incubator 41 holds the reaction container 30, and the temperature therein is adjusted to a proper temperature for the purpose of accelerating the reaction of the sample and the reagent. Upon completion of a first sample-reagent reaction process on the incubator 41, the reaction container 30 is moved to the sample discharge position 31 by the first conveyance mechanism 35, and is further moved to the reagent discharge position 32 by the second conveyance mechanism 36.

Next, the reagent dispensing mechanism 52 dispenses the predetermined volume of the second reagent into the reaction container 30 placed in the reagent discharge position 32. At this time, immediately before the reagent dispensing mechanism 52 aspirates the second reagent, the reagent stirring mechanism 53 stirs the second reagent to redisperse the magnetic particles. After the dispensing of the second reagent is complete, the reaction container 30 is moved to the position of the reaction container stirring mechanism 42 by the second conveyance mechanism 36, and the mixed liquid within the reaction container 30 is stirred.

After the reaction liquid is stirred, the reaction container 30 is moved again to the incubator 41 by the first conveyance mechanism 35, and a second reaction process is performed. After the completion of the second reaction process, the reaction container 30 is moved to the sample discharge position 31 by the first conveyance mechanism 35, and is further moved to the reaction container delivery position 33 by the second conveyance mechanism 36. The reaction liquid within the reaction container 30 is aspirated into a sensing portion in the measurement unit 43 to perform a measurement of a reaction signal.

After the signal measurement, the reaction container 30 is moved to the sample discharge position 31 by the second conveyance mechanism 36, and then is discarded into a reaction container waste hole by the first conveyance mechanism 35.

The above-described mechanisms of the automatic analyzer 1 are referred to as an analytical operation section.

Further, in addition to the analytical operation section, the automatic analyzer 1 includes the control unit 3 for controlling the operation of each equipment, including the sample holding unit 11 and the sample dispensing mechanism 51, within the automatic analyzer 1.

The control unit 3 may be constituted by a computer having a display unit such as a liquid crystal display and/or the like, input equipment, a storage device, CPU, memory and/or the like, or alternatively may be constituted by another computer as being constituted by a single computer, without particular limitation.

The control on operation of each equipment by the control unit 3 is executed on the basis of various programs recorded in the storage unit 4. It is noted that the operational control processing executed by the control unit 3 may be performed by a single collectively designed program or may be performed by a plurality of separate programs, or alternatively, by a combination thereof. A portion or all of the program may be implemented by dedicated hardware or may be modularized.

The above is the configuration of the automatic analyzer 1 according to the present embodiment.

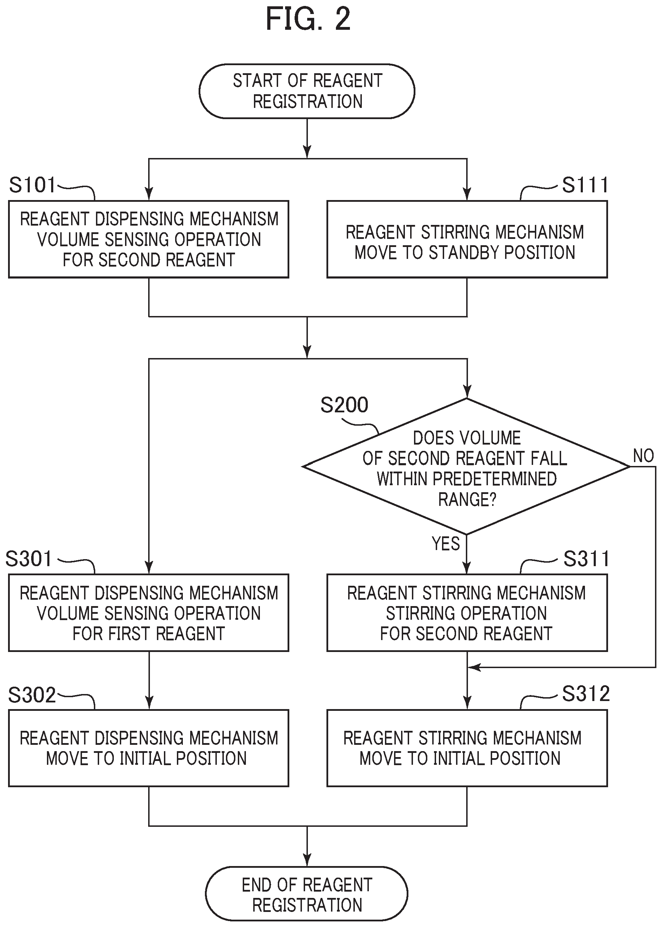

A characteristic configuration according to the present embodiment will be then described with reference to Fig. 2 and subsequent figures.

Fig. 2 is a diagram illustrating an operation flow for reagent registration. Reagent registration includes a volume sensing operation for the second reagent by the reagent dispensing mechanism 52 (step S101), a movement operation of the reagent stirring mechanism 53 to a standby position (step S111), an operation of determining a liquid volume of the second reagent (step S200), a volume sensing operation for the first reagent by the reagent dispensing mechanism 52 (step S301), a movement operation of the reagent dispensing mechanism 52 to an initial position (step S302), a stirring operation for the second reagent by the reagent stirring mechanism 53 (step S311), and a movement operation of the reagent stirring mechanism 53 to an initial position (step S312). The details of the reagent registration operation will be described below in process sequence.

In a step of storing information on a newly used reagent in the storage unit 4, after a reagent dispensing probe 521 used as a sensing portion senses a volume of the second reagent contained in a second reagent bottle (second reagent container) 222, the control unit 3 controls in parallel the reagent dispensing probe 521 used as the sensing portion to perform an operation of sensing a volume of the first reagent contained in a first reagent bottle (first reagent container), and a stirring paddle 531 serving as a stirring portion to perform an operation of stirring the second reagent contained in the second reagent bottle 222.

The first reagent bottle (first reagent container) 221 of the reagent container 22 is arranged in a position to which the reagent dispensing probe 521 of the reagent dispensing mechanism 52 is moved for access thereto, and the second reagent bottle (second reagent container) 222 is arranged in a position to which the reagent dispensing probe 521 of the reagent dispensing mechanism 52 and the stirring paddle 531 of the reagent stirring mechanism 53 are moved for access thereto.

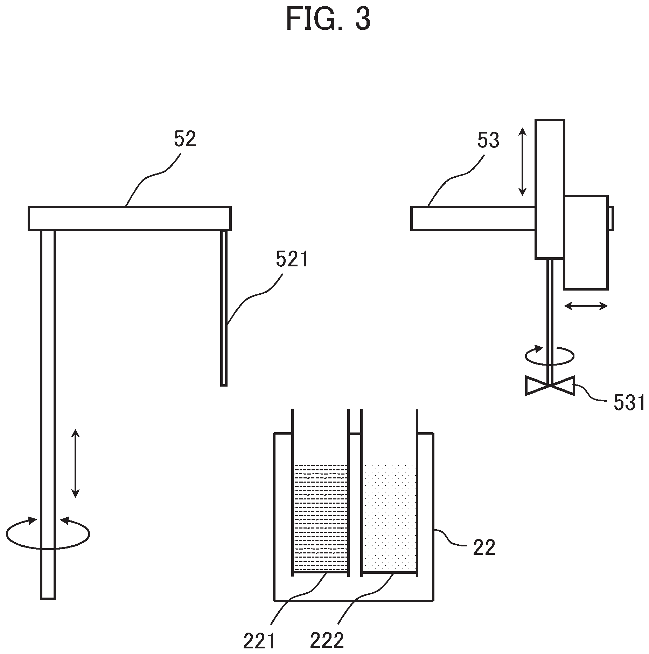

Fig. 3 is a side view illustrating the positional relationship of the reagent container 22, the reagent dispensing mechanism 52, and the reagent stirring mechanism 53 between a start time and an end time of the reagent registration.

The reagent container 22 includes the first reagent bottle 221 that contains the first reagent and the second reagent bottle 222 that contains the second reagent including magnetic particles. Furthermore, during the reagent registration operation, the reagent container 22 moves to the reagent dispensing position 25 that can be reached by the reagent dispensing mechanism 52 and the reagent stirring mechanism 53 as they move.

The reagent dispensing mechanism 52 includes the reagent dispensing probe 521 at the tip of an arm, and can, for example, aspirate the reagent into the reagent dispensing probe 521 via pressure propagation by a syringe pump and water, or discharge the reagent into the reaction container 30. The reagent dispensing probe 521 is configured to be able to access both the first reagent bottle 221 and the second reagent bottle 222.

Furthermore, the reagent dispensing probe 521 is used as a fluid level sensing portion having a fluid level sensing function. The fluid level sensing function can be implemented, for example, using a capacitive method. The control unit 3 monitors a change in capacitance when the reagent dispensing probe 521 comes into contact with the liquid level of the reagent while lowering the reagent dispensing mechanism 52, and can stop the lowering movement of the reagent dispensing mechanism 52 on the basis of the monitoring result. Whereby, it is possible to sense the liquid level height of the reagent, that is, the liquid volume within the reagent bottle, or to perform a reagent aspiration operation with the reagent dispensing probe 521 immersed in the liquid level by a predetermined distance.

The reagent stirring mechanism 53 includes the stirring paddle 531 that functions as the stirring portion. The stirring paddle 531 is configured to be able to access the second reagent bottle 222. The stirring paddle 531 has a propeller-shaped tip, and stirs the second reagent within the second reagent bottle 222 by rotationally driving the tip. Furthermore, the control unit 3 can control the rotation speed and rotation time of the stirring paddle 531 to vary according to the liquid volume within the second reagent bottle 222.

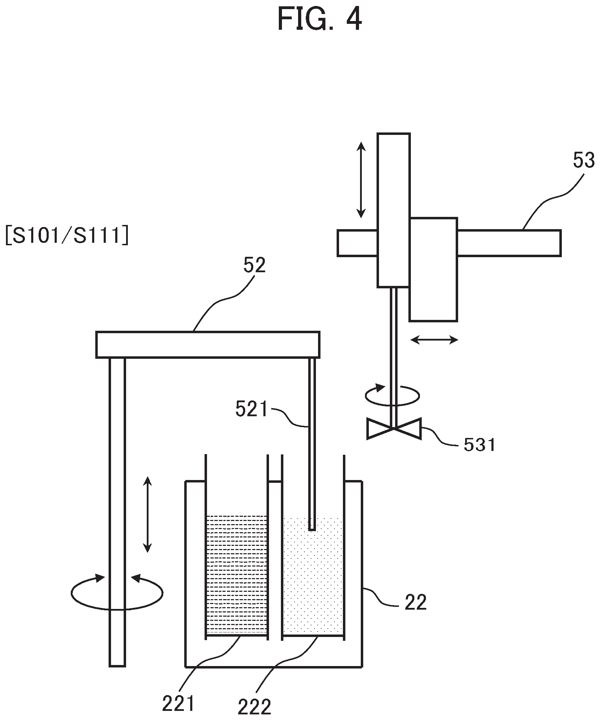

Fig. 4 is a side view illustrating the positional relationship of the reagent container 22, the reagent dispensing mechanism 52, and the reagent stirring mechanism 53 after the first operation during the reagent registration operation is performed. When the reagent registration operation is started, the reagent dispensing mechanism 52 first moves to the position of the second reagent bottle 222 and lowers the reagent dispensing probe 521 to sense the liquid volume of the second reagent (step S101 in Fig. 2). Also, in parallel with this, the control unit 3 controls to move the reagent stirring mechanism 53 to the standby position near the second reagent bottle 222 (step S111).

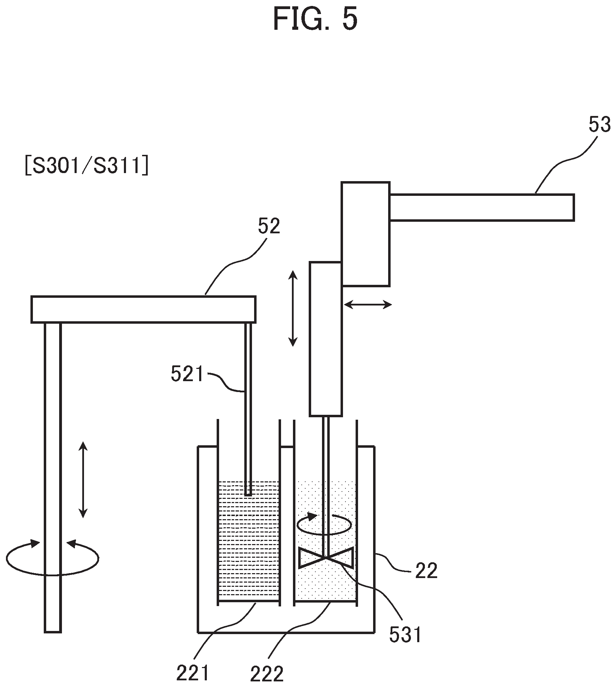

Fig. 5 is a side view illustrating the positional relationship of the reagent container 22, the reagent dispensing mechanism 52, and the reagent stirring mechanism 53 in an operation after the liquid volume of the second reagent is sensed. Fig. 5 corresponds to a case where the liquid volume of the second reagent falls within a predetermined range in the step of determining the liquid volume (step S200). The reagent dispensing mechanism 52 moves from the second reagent bottle 222 to the position of the first reagent bottle 221, and lowers the reagent dispensing probe 521 to sense the liquid volume of the first reagent (step S301). After the volume sensing operation for the first reagent is complete, the reagent dispensing mechanism 52 moves to its initial position (step S302). On the other hand, in parallel with the operation of the reagent dispensing mechanism 52, the reagent stirring mechanism 53 performs the stirring operation for the second reagent (step S311), and then moves to its initial position (step S312).

In order to enable such control, the reagent dispensing mechanism 52 and the reagent stirring mechanism 53 are shaped and in the positional relationship in such a way that they do not collide with each other when they are accessing the first reagent bottle 221 and the second reagent bottle 222, respectively.

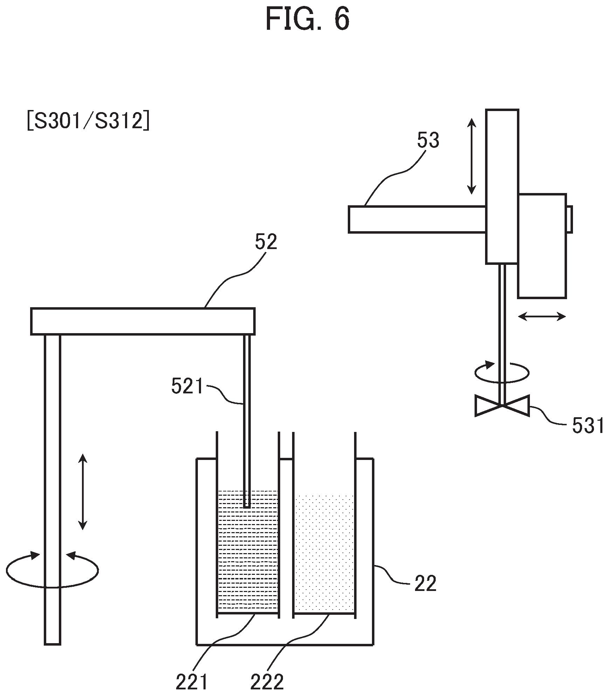

Fig. 6 is a side view illustrating the positional relationship of the reagent container 22, the reagent dispensing mechanism 52, and the reagent stirring mechanism 53 in an operation after the liquid volume of the second reagent is sensed. Fig. 6 corresponds to a case where the liquid volume of the second reagent falls without a predetermined range in step S200 of determining the liquid volume. As in Fig. 5, the reagent dispensing mechanism 52 moves from the second reagent bottle 222 to the position of the first reagent bottle 221, and lowers the reagent dispensing probe 521 to sense the liquid volume of the first reagent (step S301). After the volume sensing operation for the first reagent is complete, the reagent dispensing mechanism 52 moves to its initial position (step S302). On the other hand, the reagent stirring mechanism 53 is controlled by the control unit 3 to move directly to its initial position without performing the stirring operation for the second reagent (step S312).

Although not explicitly illustrated in the flowchart of Fig. 2, it is desirable to clean inner and outer walls of the reagent dispensing probe 521 in a reagent probe cleaning bath (omitted for the purpose of graphical expression) immediately after the volume sensing operation for each reagent is complete. Furthermore, it is desirable to clean the stirring paddle 531 in a stirring paddle cleaning tank (omitted for the purpose of graphical expression) immediately after the reagent stirring operation is complete. At this time, the reagent probe cleaning bath and the stirring paddle cleaning tank are disposed so that a path through which the reagent dispensing mechanism 52 moves between the first reagent bottle 221 and the reagent probe cleaning bath does not interfere with a path through which the reagent stirring mechanism 53 moves between the second reagent bottle 222 and the stirring paddle cleaning tank.

Next, the effects of the present embodiment will be described.

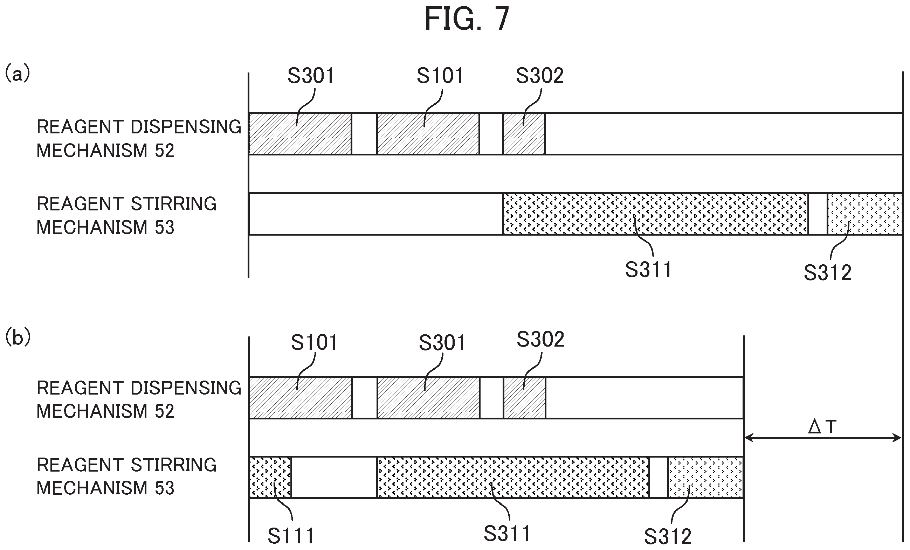

Fig. 7 is a diagram illustrating time required to register a reagent. (a) of Fig. 7 illustrates an example different from the present embodiment and illustrates a case where reagent stirring is performed after both the volume sensing operations for the first reagent and the second reagent are complete, and (b) of Fig. 7 illustrates a case where the control of the present embodiment is implemented. Comparing the two, in the case of (b) of Fig. 7, the reagent stirring operation (step S311) can be started earlier than in (a) of Fig. 7, making it possible to shorten, by ΔT, the time until the entire reagent registration operation is complete.

Furthermore, by moving the reagent stirring mechanism 53 near the second reagent bottle 222 in advance (step S111), the time required for the reagent stirring operation (step S311) itself can be shortened. Whereby, it is possible to further reduce the overall time required.

Moreover, by skipping the reagent stirring operation (step S311) if the liquid volume of the second reagent does not fall within the predetermined range, it is possible to prevent the reagent from splashing out due to the stirring operation if the liquid volume is too low, and to prevent insufficient stirring if the liquid volume is too high.

That is, according to the embodiment of the present invention, the volume check operation and the reagent stirring operation during reagent registration can be performed efficiently, the time required for the reagent registration can be shortened, and the overall analysis operation time can be shortened.

### <Others>

It should be noted that the present invention is not limited to the embodiments described above, and includes various modifications. The above-described embodiments have been described in detail in order to facilitate the understanding of the present invention, and the present invention is not necessarily limited to those including all of the described configurations.

In addition, part of the configuration of one embodiment can be replaced with the configurations of other embodiments, and in addition, the configuration of the one embodiment can also be added with the configurations of other embodiments. In addition, part of the configuration of each of the embodiments can be subjected to addition, deletion, and replacement with respect to other configurations.

### List of Reference Signs

1: automatic analyzer
2: analysis section
3: control unit
4: storage unit
10: sample container
11: sample holding unit
12: sample aspiration position
13: sample information reader
21: reagent holding unit
22: reagent container
25: reagent aspiration position
30: reaction container
31: sample discharge position
32: reagent discharge container
33: reaction container delivery position
34: reaction container tray
35: first conveyance mechanism
36: second conveyance mechanism
41: incubator
42: reaction container stirring mechanism
43: measurement unit
51: sample dispensing mechanism
52: reagent dispensing mechanism
53: reagent stirring mechanism
221: first reagent bottle
222: second reagent bottle
521: reagent dispensing probe (fluid level sensing portion)
531: stirring paddle
S101: volume sensing operation for second reagent by reagent dispensing mechanism
S111: movement operation of reagent stirring mechanism to standby position
S200: step of determining liquid volume of second reagent
S301: volume sensing operation for first reagent by reagent dispensing mechanism
S302: movement operation of reagent dispensing mechanism to initial position
S311: stirring operation for second reagent by reagent stirring mechanism
S312: movement operation of reagent stirring mechanism to initial position

## Claims

1. An automatic analyzer, comprising:
a sensing portion for sensing a volume of a reagent contained in a container;
a stirring portion for stirring the reagent contained in the container;
a control unit for controlling the sensing portion and the stirring portion; and
a storage unit for storing information on reagents,
wherein, in a step of storing information on a newly used reagent in the storage unit, after the sensing portion senses a volume of a second reagent contained in a second reagent container, the control unit controls in parallel the sensing portion to perform an operation of sensing a volume of a first reagent contained in a first reagent container, and the stirring portion to perform an operation of stirring the second reagent.

2. The automatic analyzer according to claim 1,
wherein, if the volume of the second reagent falls outside a predetermined range,
the control unit controls the stirring portion to perform no operation of stirring the second reagent.

3. The automatic analyzer according to claim 1,
wherein the control unit controls to move the stirring portion near the second reagent container while the sensing potion is sensing the volume of the second reagent contained in the second reagent container.

4. The automatic analyzer according to claim 1,
wherein the sensing portion senses the volume of the first reagent and the volume of the second reagent using a reagent dispensing probe which aspirates and discharges the reagent.

5. The automatic analyzer according to claim 1,
wherein the first reagent container is arranged in a position to which the sensing portion is moved for access thereto, and the second reagent container is arranged in a position to which the sensing portion and the stirring portion are moved for access thereto.

6. The automatic analyzer according to claim 1, wherein the second reagent includes magnetic particles.

7. A method of automatic analysis, comprising:
a first sensing step of sensing a volume of a first reagent;
a second sensing step of sensing a volume of a second reagent; and
a stirring step of stirring the second reagent, wherein, in a step of storing information on a newly used reagent in a storage unit, after execution of the second sensing step, the first sensing step and the stirring step are executed in parallel.
